# EUROPEAN PATENT APPLICATION

(11) **EP 4 220 587 A1**
(43) Date of publication of application: **02.08.2023**
(21) Application number: 23152885.2
(22) Date of filing: 23.01.2023
(51) Int. Cl.: G07C 5/00, G07C 5/08, H04W 4/44, B60L 53/66

(54) **METHOD AND SYSTEM TO IMPROVE ADVANCED DRIVER ASSIST SYSTEM DATA COLLECTION AND UPLOAD**

(30) Priority: 28.01.2022 US 202263304092 P
(71) Applicant: ZF Active Safety and Electronics US LLC, Livonia MI 48150 (US)
(72) Inventor: Goindi, Anil, Michigan, 48150 (US); Wilson, David, Michigan, 48380 (US); Jazwiecki, Matthew, Michigan, 48150 (US)
(74) Representative: Ege Lee & Roider Patentanwälte

(57) **Abstract**

In one exemplary arrangement, a data logging device for a vehicle is disclosed that comprises a computing unit, a data interface and a data box. The computing unit is configured to collect data from a vehicle. The collected data is transferred from the computing unit to the data box that is integrally housed in the data logging device via the data interface. The data box is configured to transmit data externally from the data logging device to a cloud storage solution.

## Description

### CROSS-REFERENCE TO RELATED APPLICATIONS

This application claims priority to U.S. Provisional Application No. 63/304,092 filed on January 28, 2022, the entirety of which are incorporated therein.

### TECHNICAL FIELD

The present disclosure relates to a vehicle system for collecting data from advanced driver assist systems (ADAS) and transmitting the data to a cloud. More specifically, the present disclosure relates to a vehicle system for improving the operation and efficiency of data collection and transmission.

### BACKGROUND

Products and systems of both Original Equipment Manufacturers (OEMs) and ADAS suppliers collect data relevant to the operation of a vehicle and/or the environment in which a vehicle operates, including data collection required by governmental institution regulations. Non-limiting examples of ADAS data collecting components include cameras and long and short range radars, for example. These components are integrated with a vehicle which, when operated generate data concerning various vehicle operations, such as, for example, object detection, cross traffic alerts, forward collision warnings and adaptive cruise control. Other data can also be collected such as vehicle telematics data. The vehicle data is collected and then ultimately transmitted to a cloud storage solution for further processing and use.

### SUMMARY

In one exemplary arrangement, a data logging device for a vehicle is disclosed that comprises a computing unit, a data interface and a data box. The computing unit is configured to collect data from a vehicle. The collected data is transferred from the computing unit to the data box that is integrally housed in the data logging device via the data interface. The data box is configured to transmit data externally from the data logging device to a cloud storage solution.

In one or more exemplary arrangements of the present disclosure, a vehicle includes one or more sensors, configured generate data; one or more wireless transceivers, configured to communicate with a cloud storage system; and a data logger including a storage device, and programmed to, responsive to receiving the data from the one or more sensors, divide the data into a first category and a second category, transmit the first category data to the cloud storage system via the one or more wireless transceivers in real time while the vehicle is being driven, and store the second category data in the storage device without transmitting via the one or more wireless transceivers while the vehicle is being driven.

In one or more exemplary arrangements of the present disclosure, a data logging device for a vehicle includes a data box configured to receive data from one or more sensors of the vehicle; and a computing device programmed to, divide the data into a first category and a second category, transmit the first category data to the cloud storage system via one or more wireless transceivers on board the vehicle in real time while the vehicle is being driven, and store the second category data in the data box without transmitting via the one or more wireless transceivers while the vehicle is being driven.

### BRIEF DESCRIPTION OF THE DRAWINGS

Exemplary arrangements of the present disclosure will now be described in greater detail with reference to the attached figures, in which:
FIG. 1 is an example of an existing ADAS data transfer arrangement; and

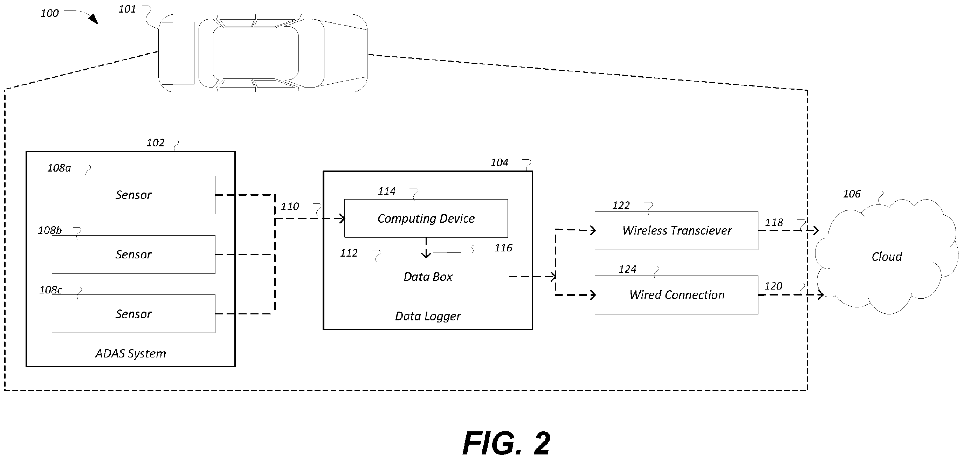

FIG. 2 is an exemplary arrangement of an ADAS data transfer arrangement of the present disclosure.

### DETAILED DESCRIPTION

Embodiments are described herein. It is to be understood, however, that the disclosed embodiments are merely examples and other embodiments may take various and alternative forms. The figures are not necessarily to scale. Some features could be exaggerated or minimized to show details of particular components. Therefore, specific structural and functional details disclosed herein are not to be interpreted as limiting, but merely as a representative basis for teaching one skilled in the art.

Various features illustrated and described with reference to any one of the figures may be combined with features illustrated in one or more other figures to produce embodiments that are not explicitly illustrated or described. The combinations of features illustrated provide representative embodiments for typical applications. Various combinations and modifications of the features consistent with the teachings of this disclosure, however, could be desired for particular applications or implementations.

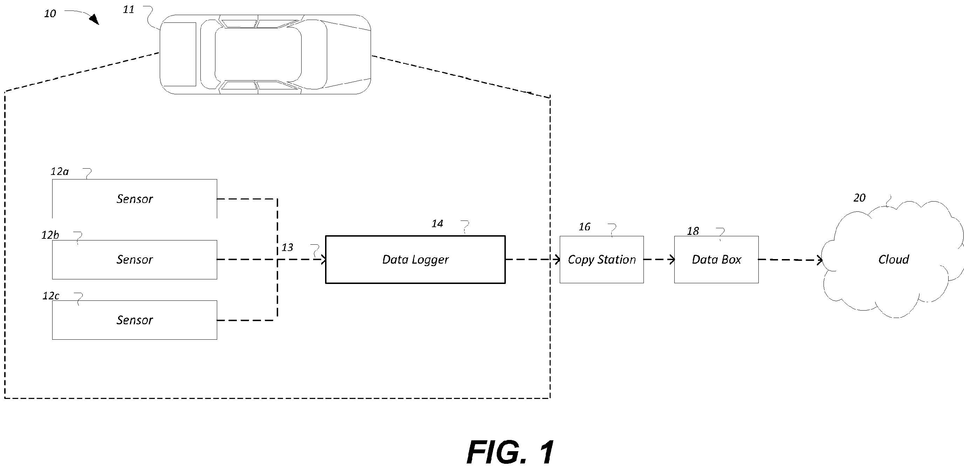

The existing process of transferring vehicle data to the cloud is inefficient and costly. For example, in one system 10, referring to FIG. 1, data 13 from various components/sensors 12a, 12b, 12c of a vehicle 11 is recorded in one or more data loggers 14, each of which typically includes a microprocessor, an internal memory for data storage and one or more sensors to collect data. However, the collected data needs to be cleared from the datalogger at predefined intervals e.g. due to the limited capacity of the datalogger 14. Traditionally, the data is copied from the data logger 14 to a data storage device such as a third party data box off-board the vehicle 11 via a copy station 16. The data box 18 may include one or more computer readable medium capable of storing terabytes of data in a secure way. The data box 18 is then delivered to the third party and the data is then uploaded from the data box 18 to a cloud storage solution 20 such as one or more servers. For certain third party data box suppliers, the data may be uploaded from the data box to the cloud storage solution 18 at a transfer speed of approximately 300 TB/HR.

However, with ADAS systems becoming more complex and advanced (i.e., more powerful sensors getting more information and/or performing more functions), such systems are producing increasingly more data. Accordingly, efficiently transferring the data to the cloud storage solution 20 for processing and use is exceedingly difficult in a timely and cost-effective manner. For example, in one exemplary arrangement, a three-hour drive of the vehicle 11 produces approximately 32 TB of data for one vehicle 11. To copy the data to a copy station 16 may take approximately 12.5 hours using the existing process. Thus, for testing and collecting data from the vehicles 11, for example, the vehicle 11 must remain out of service until the data is fully transferred to the copy station 16, creating inefficiency, and generating high cost to manage the data transfer process. Moreover, there is also a time lag for transmitting the disks from the copy station 16 to the data specialist to store onto the data box 18 further prolonging the process.

Moreover, known data loggers 14 may employ a Linux-based operating system, while the data boxes 18 may employ an NT file system (NTFS) that specifies how data is stored on a drive and has large data storage capacities. However, NTFS may not be compatible with Linux based systems. As such, the copy stations 16 may need to provide a function to assist in the data transfer process further increasing the complexity of the process.

Referring to the figures, an exemplary system 100 and method for transferring ADAS data of one embodiment of the present disclosure is illustrated. In the present example, the system 100 may include an ADAS system 102, a data logger 104, and a cloud storage system 106. The ADAS system 102 and data logger 104 may be configured to be on-board a vehicle 101. The vehicle 101 may be propelled by various energy sources. For instance, the vehicle 101 may include an internal combustion engine (not shown) consuming gasoline or natural gas for propulsion. Additional or alternatively, the vehicle 101 may be a battery electric vehicle (BEV) or a plug-in hybrid electric vehicle (PHEV) in which a traction battery (not shown) may supply electric power to one or more electric motors (not shown) for propulsion.

The ADAS system 102 may include various components configured to monitor vehicle operations and collect various vehicle data generated during the vehicle operations. For instance, the ADAS system 102 may include one or more ADAS sensor components 108a, 108b, 108c. In a non-limiting example, the ADAS sensor components 108a, 108b, 108c may include a vehicle camera associated with features such as lane departure warning, object detection or the like. Additionally or alternatively, the ADAS sensor components 108a, 108b, 108c may further include a short-range radar device associated with features such as blind spot detection, cross traffic alert or the like. Additionally or alternatively, the ADAS sensor components 108a, 108b, 108c may include a long-range radar device associated with features such as adaptive cruise control, forward collision warning or the like. Data 110 collected and/or generated by the sensor components 108a, 108b, 108c may be transmitted to the data logger 104 for further processing and logging.

Different from the existing solutions, the data logger 104 of the present disclosure may include an integrated data box 112 on-board the vehicle 101. More specifically, the vehicle data 110 may be collected by a computing device 114 associated with the data logger 104, and then transferred to a primary storage 112 via a data interface 116. In the present exemplary system 100, the computing device 114 may be integrated with the data logger 104 and in communication with the ADAS sensor components 108a, 108b, 108c via an in-vehicle network (not shown). The in-vehicle network may include, but is not limited to, one or more of a controller area network (CAN), an Ethernet network, and a media-oriented system transport (MOST), as some examples. Furthermore, the in-vehicle network, or portions of the in-vehicle network, may be a wireless network accomplished via Bluetooth low-energy (BLE), Wi-Fi, ultra-wide band (UWB), or the like. The computing device 114 may include any computing devices provided with data processing and transferring capabilities. For instance, the computing device 114 may be implemented via various vehicle components such as one or more of controllers, computers, electronics control units (ECU) or the like.

The primary storage 112 may include a data box 112 integrated with the data logger 104 and configured to receive the data directly from the data interface 116. The data box 112 may be implemented via various ways. For instance, the data box 112 may include one or more computer storage devices (e.g. hard drives, solid state drives, optical drives) to receive and store data originated from the ADAS sensor components 108a, 108b, 108c. The data box 112 may be integrated with the vehicle 101 in a non-removable or removable configuration depending on various design needs. For instance, one or more of the computer-readable storage devices of the data box 112 may be removable and replaceable. To increase compatibility, the data box 112 may be configured in one or more variants of File Allocation Table (FAT) format. For instance, the data box 112 may be configured in Extended File Allocation Table (exFAT) format due to the support of large file and partition sizes. In addition, the exFAT format is compatible with various operating system including LINUX, UNIX, Windows, MacOS or the like. Therefore, an additional step of converting the data to a different format supported by the cloud which is conventionally performed by the copy station may be avoided.

The data interface 116 may be implemented via a variety of components of the vehicle 101. For instance, the data interface 116 may include one or more of a wired connection having one or more fixed and/or removable connectors (e.g. USB, Ethernet). Additionally or alternatively, the data interface 116 may include a wireless connection (e.g. Wi-Fi). In one example, the data interface 116 or portions of the data interface 116 may be implemented via the in-vehicle network discussed above. The data may then be transferred externally from the data logger 104, wirelessly and/or via a cable, to a cloud storage system 106.

That is, in one exemplary arrangement, the vehicle 101 may be configured to communicate with the cloud storage system 106 via a wireless connection 118 enabled by one or more wireless transceivers 112 and/or a wired connection 120 enabled by one or more wired connections 124. The wireless transceiver 122 may be configured to support various wireless communication protocols such as Wi-Fi, Bluetooth, radio-frequency identification (RFID), a near-field communication (NFC), Zigbee, IrDA, UWB or the like and configured to communicate with a corresponding transceiver (not shown) to send the data 110 to the cloud storage system 106. The wired connection 124 may be configured to support various wired communication protocols such as USB, Ethernet, powerline communication (PLC), on-board diagnostics (OBD) or the like and configured to transmit the data to the cloud storage system 106 when the vehicle 101 is parked and connected to a corresponding wired port (not shown). For instance, when the vehicle 101 is parked, a user/technician may plug in a cable into the wired connection to access the data 110 from stored in the data box 112. This may be done via a on-board dongle.

Additionally or alternatively, in case that the vehicle 101 is a BEV or PHEV which required fueling by charging a high-voltage traction battery (not shown) via an external power source through infrastructures such as an electric vehicle supply equipment (EVSE), the wired connection 124 may be integrated with the charging socket of the vehicle 101 such that the data 110 may be send to the cloud storage system 106 via the charging cable while the vehicle 101 is being refueled, avoiding wasting extra time.

In one exemplary arrangement, the data logger 104 may be configured to distinguish and separate critical data (also referred to as data frames) from the remaining non-critical data. The critical data may be referred to herein as a first category of data while non-critical data may be referred to herein as a second category of data. The data logger 104 may be further configured to enable immediate and/or continuous upload of the critical data to the cloud storage system 106 via the wireless connection 118 and stores the non-critical data in the data box 112 without uploading while the vehicle is being driven. For instance, the critical data may include safety-related data where time is critical to address potential problems. Such a transfer can be performed wirelessly via the wireless transceiver 122. The remaining non-critical data may be temporarily stored in the data box 112 and collectively transferred once the wired connection 120 has become available. Additionally or alternatively, the non-critical data may also be transmitted via the wireless transceiver 122 in addition to via the wired connection 124. The non-critical data may be transmitted either wired or wirelessly at predetermined intervals based on factors such as time, milage as well as other operation parameters. Thus, the non-critical data may be stored temporarily at certain intervals or until a trigger event occurs such an expiration of time, distance, amount of data exceeded, etc. Even using the wireless transceiver 122, the non-critical data may be transmitted in a collective (non-real-time) manner. For instance, the data logger 104 may be configured to distinguish a high priority/cost wireless connection (e.g. cellular) from a low priority/cost wireless connection (e.g. Wi-Fi). The critical data may be transmitted to the cloud storage system 106 in a real time manner via the high priority/cost wireless connection whereas the non-critical data may be collectively transmitted once the low priority/cost wireless connection has become available (e.g. when the vehicle is located at a location with Wi-Fi coverages).

The arrangements of the present disclosure may be applied to various instances. For example, the critical data may be transmitted via the wireless transceiver 122 using the high priority/cost wireless connection in the real time manner while the vehicle 101 is being driven. Responsive to the vehicle is parked and the charger is plugged in, the data logger 104 may determining the charging period for the vehicle battery to be fully charged (or reach a predefined state of charge). The data logger 104 may further determine if the charging period is sufficient for the vehicle 101 to upload all of the non-critical data to the cloud storage system 106 via the wired connection alone. The time to upload the data may be calculated by the size of data to upload and the data speed supported by the wired connection. If the charging period is sufficient, the data logger may upload the data using the wired connection 124 alone. Otherwise, if the charging period is insufficient to completely upload the data, the data logger 104 may activate and upload the data via the low priority/cost wireless connection through the wireless transceiver 122 in addition to using the wired connection 120 to increase the total upload speed. For instance, if the anticipated charging period is 2 hours but it will take 3 hours to fully upload the collected data via the wired connection 120 alone, an additional Wi-Fi connection may be used to assist the data upload. Additionally or alternatively, the data logger 104 may be further configured to start to upload the non-critical data via the low priority/cost wireless communication whenever available before the wired connection is plugged-in to further increase the transmission amount.

The arrangement of the present disclosure is beneficial in various aspects. For instance, compared with the conventional way transmitting the ADAS data, a number of data transfer operations may be eliminated, thereby improving overall system efficiency. As an example, the time to transfer 32 TB of data to a copy station may be eliminated (e.g., saving 12.5 hours of transfer time following the above example). In addition, since the data 110 is directly transmitted to the cloud storage system 106, shipping time of the disks from the copy station to a data vendor, and the time to transfer the data from the disks to a separate data box may be saved. Thus, time and costs can be significantly reduced under the present system 100.

In one exemplary arrangement, the data logger 104 may include devices manufactured by XYLON, with the integrated data box 112 being compatible with a cloud storage system 106, such as a MICROSOFT AZURE. However, it is understood the disclosure is not limited to this arrangement or products.

It will be appreciated that the ADAS data transfer systems and methods described herein have broad applications. The foregoing embodiments were chosen and described in order to illustrate principles of the methods and systems as well as some practical applications. The preceding description enables others skilled in the art to utilize methods and systems in various embodiments and with various modifications as are suited to the particular use contemplated. In accordance with the provisions of the patent statutes, the principles and modes of operation of this disclosure have been explained and illustrated in exemplary arrangements.

It is intended that the scope of the present methods and arrangements be defined by the following claims. However, it must be understood that this disclosure may be practiced otherwise than is specifically explained and illustrated without departing from its spirit or scope. It should be understood by those skilled in the art that various alternatives to the arrangements described herein may be employed in practicing the claims without departing from the spirit and scope as defined in the following claims. The scope of the disclosure should be determined, not with reference to the above description, but should instead be determined with reference to the appended claims, along with the full scope of equivalents to which such claims are entitled. It is anticipated and intended that future developments will occur in the arts discussed herein, and that the disclosed systems and methods will be incorporated into such future examples. Furthermore, all terms used in the claims are intended to be given their broadest reasonable constructions and their ordinary meanings as understood by those skilled in the art unless an explicit indication to the contrary is made herein. In particular, use of the singular articles such as "a," "the," "said," etc. should be read to recite one or more of the indicated elements unless a claim recites an explicit limitation to the contrary. It is intended that the following claims define the scope of the invention and that the method and apparatus within the scope of these claims and their equivalents be covered thereby. In sum, it should be understood that the invention is capable of modification and variation and is limited only by the following claims.

The processes, methods, or algorithms disclosed herein can be deliverable to/implemented by a processing device, controller, or computer, which can include any existing programmable electronic control unit or dedicated electronic control unit. Similarly, the processes, methods, or algorithms can be stored as data and instructions executable by a controller or computer in many forms including, but not limited to, information permanently stored on non-writable storage media such as Read Only Memory (ROM) devices and information alterably stored on writeable storage media such as floppy disks, magnetic tapes, Compact Discs (CDs), Random Access Memory (RAM) devices, and other magnetic and optical media. The processes, methods, or algorithms can also be implemented in a software executable object. Alternatively, the processes, methods, or algorithms can be embodied in whole or in part using suitable hardware components, such as Application Specific Integrated Circuits (ASICs), Field-Programmable Gate Arrays (FPGAs), state machines, controllers or other hardware components or devices, or a combination of hardware, software and firmware components.

While exemplary embodiments are described above, it is not intended that these embodiments describe all possible forms encompassed by the claims. The words used in the specification are words of description rather than limitation, and it is understood that various changes can be made without departing from the spirit and scope of the disclosure.

As previously described, the features of various embodiments can be combined to form further embodiments that may not be explicitly described or illustrated. While various embodiments could have been described as providing advantages or being preferred over other embodiments or prior art implementations with respect to one or more desired characteristics, those of ordinary skill in the art recognize that one or more features or characteristics can be compromised to achieve desired overall system attributes, which depend on the specific application and implementation. These attributes may include, but are not limited to strength, durability, life cycle, marketability, appearance, packaging, size, serviceability, weight, manufacturability, ease of assembly, etc. As such, embodiments described as less desirable than other embodiments or prior art implementations with respect to one or more characteristics are not outside the scope of the disclosure and can be desirable for particular applications.

## Claims

1. A data logging device for a vehicle, comprising:
a computing unit, a data interface and a data box;
wherein the computing unit is configured to collect data from a vehicle,
wherein the collected data is transferred from the computing unit to the data box that is integrally housed in the data logging device via the data interface; and
wherein the data box is configured to transmit data externally from the data logging device to a cloud storage solution.

2. The data logging device of claim 1, wherein the data box is configured with an exFAT format, and/or wherein the computing unit is configured to separate predetermined data frames from other data frames before the data is transferred to the data box.

3. The data logging device of claim 2, wherein the predetermined data frames are immediately uploaded by the data box to the cloud storage solution, and/or where the remaining data frames are transmitted to the cloud storage solution at predetermined intervals.

4. A vehicle comprising:
one or more sensors, configured to generate and transmit data;
one or more wireless transceivers, configured to communicate with a cloud storage system; and
a data logger including a storage device, and programmed to,
responsive to receiving the data from the one or more sensors, divide the data into first category data and a second category data,
transmit the first category data to the cloud storage system via the one or more wireless transceivers in real time while the vehicle is being driven, and
store the second category data in the storage device without transmitting via the one or more wireless transceivers while the vehicle is being driven.

5. The vehicle of claim 4, further comprising:
a wired connection configured to communicate with the cloud storage system via a wired connection,
wherein the data logger is further programmed to:
responsive to detecting the wired connection has become available after the vehicle is parked, transmit the second category data to the cloud storage system via the wired connection.

6. The vehicle of claim 5, further comprising:
a traction battery configured to providing propelling power to the vehicle; and
a charging socket configured to receive electric charge via a charging cable to charge the traction battery,
wherein the wired connection is integrated with the charging socket such the data is transmitted via the charging cable.

7. The vehicle of claim 6, wherein the data logger is further programmed to:
responsive to detecting plugging-in of the charging cable, determine a charging period for the traction battery to reach a predefined state of charge;
determine an uploading time to completely transmitting the second category data to the cloud storage system via the wired connection; and
responsive to the charging period being shorter than the uploading time, transmit the second category data to the cloud storage system via the one or more wireless transceivers in addition to via the wired connection.

8. The vehicle of claim 7, wherein the one or more wireless transceivers are configured to:
transmit the first category data via a high cost wireless connection; and
transmit the second category data via a low cost wireless connection,
and/or wherein the first category data include safety-related data, and the second category data does not include safety-related data.

9. The vehicle of claim 6, wherein the wired connection is configured to transmit the data using powerline communication (PLC) protocol.

10. The vehicle of claim 4, wherein the storage device is configured to support an exFAT format to store the data.

11. A data logging device for a vehicle, comprising:
a data box configured to receive data from one or more sensors of the vehicle; and
a computing device programmed to,
divide the data into first category data and a second category data, transmit the first category data to a cloud storage system via one or more wireless transceivers on board the vehicle in real time while the vehicle is being driven, and
store the second category data in the data box without transmitting via the one or more wireless transceivers while the vehicle is being driven.

12. The data logging device of claim 11, wherein the computing device is further programmed to:
responsive to detecting a wired connection connected to the vehicle, transmit the second category data to the cloud storage system via the wired connection.

13. The data logging device of claim 12, wherein the computing device is further programmed to:
transmit the first category data through a high cost wireless connection via the wireless transceiver; and
transmit the second category data through a low cost wireless connection via the wireless transceiver.

14. The data logging device of claim 13, wherein the first category data include safety-related data, and the second category data does not include safety-related data.

15. The data logging device of claim 12, wherein the wired connection is configured to transmit the data using powerline communication (PLC) protocol, and/or wherein the data box is configured to support an exFAT format to store the data.
